# EUROPEAN PATENT APPLICATION

(11) **EP 3 249 725 A1**
(43) Date of publication of application: **29.11.2017**
(21) Application number: 17172851.2
(22) Date of filing: 24.05.2017
(51) Int. Cl.: H01M 4/36, H01M 4/38, H01M 4/1315, H01M 4/48, H01M 4/485, H01M 4/52, H01M 4/525, H01M 10/52, C01G 49/00, C01G 49/06, C01G 49/10, C01G 1/06

(54) **POSITIVE ELECTRODE ACTIVE MATERIAL FOR A NON-AQUEOUS ELECTROLYTE SECONDARY BATTERY AND MANUFACTURING METHOD THEREOF, POSITIVE ELECTRODE, BATTERY, BATTERY PACK, AND VEHICLE**

(30) Priority: 26.05.2016 JP 2016105493
(71) Applicant: Yamaha Hatsudoki Kabushiki Kaisha, Iwata-shi, Shizuoka 438-8501 (JP)
(72) Inventor: ARAI, Juichi, Shizuoka-ken, Shizuoka 438-8501 (JP)
(74) Representative: Zimmermann, Tankred Klaus

(57) **Abstract**

A positive electrode active material for a non-aqueous electrolyte secondary battery according to an embodiment of the present invention includes: LiX, where X represents a halogen atom; and Fe₂O₃.

## Description

### BACKGROUND OF THE INVENTION

### 1. Field of the Invention

The present invention relates to a positive electrode active material for a non-aqueous electrolyte secondary battery and a manufacturing method thereof, a positive electrode, a battery, a battery pack, and a vehicle.

### 2. Description of the Related Art

Secondary batteries, such as lithium ion secondary batteries, are widely used in small mobile device applications (Japanese Patent Application Laid-open No. 2006-134758). In recent years, there has been a demand for development of a low-cost secondary battery excellent in charge-discharge efficiency.

### SUMMARY OF THE INVENTION

It is an object of the present invention to provide a low-cost positive electrode active material for a non-aqueous electrolyte secondary battery excellent in charge-discharge efficiency and a manufacturing method thereof.

This object is achieved by the subject matter as defined in the independent claims.

The present invention provides a positive electrode active material for a non-aqueous electrolyte secondary battery capable of being used in the manufacture of a low-cost battery excellent in charge-discharge efficiency and a manufacturing method thereof, a positive electrode containing the positive electrode active material for a non-aqueous electrolyte secondary battery, a battery including the positive electrode, and a battery pack and a vehicle each including the battery.
1. A positive electrode active material for a non-aqueous electrolyte secondary battery according to one embodiment of the present invention includes: LiX, where X represents a halogen atom; and Fe₂O₃.
2. The positive electrode active material for a non-aqueous electrolyte secondary battery according to the above-mentioned item 1 may have a molar ratio of LiX to Fe₂O₃ of 0.1 or more and 100 or less.
3. The positive electrode active material for a non-aqueous electrolyte secondary battery according to the above-mentioned item 1 or 2 may have an average particle diameter of 100 µm or less.
4. In the positive electrode active material for a non-aqueous electrolyte secondary battery according to any one of the above-mentioned items 1 to 3, a ratio of Fe₂O₃ in metal oxides contained in the positive electrode active material for a non-aqueous electrolyte secondary battery may be 1 mol% or more and 100 mol% or less.
5. A method of manufacturing a positive electrode active material for a non-aqueous electrolyte secondary battery according to one embodiment of the present invention includes mixing of first particles each formed of LiX, where X represents a halogen atom; and second particles each containing Fe₂O₃.
6. In the method of manufacturing a positive electrode active material for a non-aqueous electrolyte secondary battery according to the above-mentioned item 5, the mixing may be performed at a number of rotations of 100 rpm or more.
7. In the method of manufacturing a positive electrode active material for a non-aqueous electrolyte secondary battery according to the above-mentioned item 5 or 6, the mixing may provide a mixture having an average particle diameter of 100 µm or less.
8. In the method of manufacturing a positive electrode active material for a non-aqueous electrolyte secondary battery according to any one of the above-mentioned items 5 to 7, a molar ratio of the first particles to the second particles may be 0.1 or more and 100 or less.
9. A positive electrode according to one embodiment of the present invention includes the positive electrode active material for a non-aqueous electrolyte secondary battery of any one of the above-mentioned items 1 to 4.
10. A battery according to one embodiment of the present invention includes the positive electrode of the above-mentioned item 9.
11. A battery pack according to one embodiment of the present invention includes the battery of the above-mentioned item 10.
12. A vehicle according to one embodiment of the present invention includes the battery of the above-mentioned item 10.

Through the use of the positive electrode active material for a non-aqueous electrolyte secondary battery according to any one of the above-mentioned items 1 to 4, the low-cost battery excellent in charge-discharge efficiency can be obtained.

According to the method of manufacturing a positive electrode active material for a non-aqueous electrolyte secondary battery according to any one of the above-mentioned items 5 to 8, the low-cost positive electrode active material can be obtained by a simple method.

### BRIEF DESCRIPTION OF THE DRAWINGS

FIG. 1 is a cross-sectional view for schematically illustrating a battery according to one embodiment of the present invention.
FIG. 2 is a graph for showing charge-discharge curves of a positive electrode active material according to Test No. 1 of Example 1 of the present invention.
FIG. 3 is a graph for showing charge-discharge curves of a positive electrode active material according to Test No. 3 of Example 1 of the present invention.
FIG. 4 is a graph for showing charge-discharge curves of a positive electrode active material according to Test No. 5 of Example 1 of the present invention (in the case where the upper limit voltage is 4.4 V).
FIG. 5 is a graph for showing charge-discharge curves of the positive electrode active material according to Test No. 5 of Example 1 of the present invention (in the case where the upper limit voltage is 5 V).
FIG. 6 is a graph for showing charge-discharge curves of a positive electrode active material according to Test No. 6 of Example 1 of the present invention.

### DETAILED DESCRIPTION OF THE INVENTION

The present invention is hereinafter described in detail with reference to the drawings. In the present invention, "part(s)" means "part(s) by mass" and "%" means "mass%" unless otherwise specified.

### 1. Positive Electrode Active Material

A positive electrode active material according to one embodiment of the present invention is a positive electrode active material for a non-aqueous electrolyte secondary battery (hereinafter sometimes referred to simply as "positive electrode active material"), containing LiX, where X represents a halogen atom, and Fe₂O₃.

It is presumed that the positive electrode active material according to this embodiment contains LiX, and hence, in a battery using the positive electrode active material for its positive electrode, a lithium ion (Li⁺) and Fe₂O₃···X⁻ are generated during discharge and the lithium ion (Li⁺) can bind to Fe₂O₃···X⁻ to generate Li⁺··· Fe₂O₃···X⁻ during charge, as shown in the reaction formula (2) to be described later.

The positive electrode active material according to this embodiment contains LiX, which generates an anion of a halogen atom (X⁻) having high electronegativity through ionization, and hence through the use of the positive electrode active material according to this embodiment, which contains inexpensive Fe₂O₃ as its host material, as a positive electrode active material, a low-cost battery excellent in charge-discharge efficiency can be manufactured.

More specifically, the positive electrode active material according to this embodiment contains LiX, where X represents a halogen atom, and Fe₂O₃.

The positive electrode active material according to this embodiment contains a mixture obtained by the mixing of first particles each formed of LiX, where X represents a halogen atom, and second particles each containing Fe₂O₃. A method of mixing the first particles and the second particles is described later.

The positive electrode active material according to this embodiment can be suitably used as a positive electrode active material for a secondary battery, and can be particularly suitably used as a positive electrode active material for a non-aqueous electrolyte secondary battery.

### 1.1. Charge-discharge Mechanism of Battery

The inventors of the present invention have presumed that a battery (secondary battery, for example, non-aqueous electrolyte secondary battery) using the positive electrode active material according to this embodiment in its positive electrode may be charged and discharged by the following reaction mechanism.

LiX and Fe₂O₃ bind to each other to form Li⁺···Fe₂O₃···X⁻. In this case, it is presumed that the presence of LiX allows charge migration in Fe₂O₃ containing Fe³⁺ (that is, a trivalent iron ion), to thereby allow an electrode reaction to occur.

More specifically, as shown in the following reaction formulae (1) and (2), it is presumed that part of LiX dissociates into Li⁺ and X⁻, whereby a dissociated lithium ion (Li⁺) locally binds to oxygen (and / or iron) of one molecule of Fe₂O₃, and one dissociated anion (X⁻) binds to oxygen (and / or iron) of Fe₂O₃, with the result that Li⁺···Fe₂O₃···X⁻ is stably present. A charge-discharge reaction represented by the reaction formula (2) is repeated.

(Reaction formulae) LiX→Li⁺+X⁻··· (1)

Li⁺···Fe₂O₃ X⁻↔Li⁺+Fe₂O₃···X+e⁻··· (2)

In this case, LiX is preferably LiF (that is, the anion is preferably a fluorine ion (F⁻)) from the viewpoint of having high electronegativity and stably binding to oxygen (and / or iron) with ease.

In the positive electrode active material according to this embodiment, from the viewpoint of enabling the manufacture of a battery having higher charge-discharge efficiency, the molar ratio of LiX to Fe₂O₃ in the mixture may be 0.1 or more and 100 or less, is preferably 10 or less, and is generally 0.5 or more and 10 or less.

In addition, from the viewpoint of enabling the conversion from LiX to Li⁺ and X- to proceed uniformly and smoothly in a battery manufactured using the positive electrode active material according to this embodiment, the average particle diameter (primary particle diameter) of the positive electrode active material according to this embodiment (the mixture) is preferably 100 µm or less, and for example, may be 100 nm or more and 100 µm or less, or may be less than 500 nm. In addition, from the viewpoint of shortening the distance between LiX and Fe₂O₃ to enable X- to bind to Fe₂O₃ more stably, the average particle diameter (primary particle diameter) of the mixture is preferably less than 10 µm, more preferably less than 1 µm, still more preferably less than 500 nm. For example, through the adjustment of the diameters of balls to be used for a ball mill, the mixture having an average particle diameter of less than 1 µm may be obtained.

### 1.2. LiX

Examples of the halogen atom contained in LiX include a fluorine atom, a chlorine atom, a bromine atom, and an iodine atom. The anion of the halogen atom has high electronegativity, and hence can stably bind to oxygen (and / or iron) contained in Fe₂O₃. Accordingly, at the time of the operation of a battery using the positive electrode active material according to this embodiment for its electrode (positive electrode), when the anion of the halogen atom binds to Fe₂O₃ in the positive electrode, the anion of the halogen atom can be stably retained in the positive electrode. In particular, X preferably represents a fluorine atom from the viewpoint of having higher electronegativity, and hence being able to form more stable binding to oxygen (and / or iron).

### 1.3. Fe₂O₃

Fe₂O₃ (iron(III) oxide, ferric oxide) is so-called red rust, and is a reddish brown solid. The inventors of the present invention have found that when Fe₂O₃, which contains a trivalent iron ion, is used in combination with LiX, Fe₂O₃ can be used as a positive electrode active material capable of releasing an electron.

There is known a battery using, as a positive electrode active material, FeO or Fe₃O₄, which is an iron oxide containing a divalent iron ion (Japanese Patent Application Laid-open No. 2015-128023). In this battery, through the use of FeO or Fe₃O₄ as the positive electrode active material, an electron is released upon conversion of the divalent iron ion to a trivalent iron ion. As apparent from the foregoing, the trivalent iron ion has generally been considered not to cause charge-discharge.

Under such circumstances, the inventors of the present invention have found for the first time that Fe₂O₃ and LiX function as a positive electrode active material through the utilization of Fe₂O₃, which is an iron oxide containing only trivalent iron ions, and have created a battery utilizing LiX and Fe₂O₃ as a positive electrode active material.

In the positive electrode active material according to this embodiment, for example, the ratio of Fe₂O₃ in metal oxides contained in the positive electrode active material is preferably 1 mol% or more and 100 mol% or less, for example, 50 mol% or more and 100 mol% or less.

For example, red rust may be used as Fe₂O₃. Red rust is widely present in nature, and is inexpensive. When red rust is used as Fe₂O₃, even lower cost can be achieved.

### 1.4. Action and Effect

The positive electrode active material according to this embodiment contains the mixture of LiX and Fe₂O₃, and hence when the positive electrode active material is used for, for example, a positive electrode, LiX and Fe₂O₃ each function as a positive electrode active material. X- (anion of a halogen atom) has high electronegativity. Accordingly, through the use of LiX in the positive electrode active material, X- and Fe₂O₃ can more stably bind to each other, and hence lower cost is achieved and an electrode excellent in charge-discharge efficiency can be formed.

### 2. Method of Manufacturing Positive Electrode Active Material

The positive electrode active material according to the above-mentioned embodiment may be obtained by the following manufacturing method. That is, a method of manufacturing a positive electrode active material according to one embodiment of the present invention (hereinafter sometimes referred to simply as "manufacturing method") includes a step of mixing of first particles each formed of LiX, where X represents a halogen atom; and second particles each containing Fe₂O₃.

More specifically, through the mixing step, a mixture (having an average particle diameter of 100 µm or less, preferably 100 nm or more and 100 µm or less) of the first particles and the second particles can be obtained.

In the manufacturing method according to this embodiment, from the viewpoint of enabling uniform dispersion of the first particles and the second particles, the mixing step is preferably performed at a number of rotations of 100 rpm or more, preferably 100 rpm or more and 1,500 rpm or less (more preferably 1,000 rpm or less). Through the mixing of the first particles and the second particles at the above-mentioned number of rotations, the first particles and the second particles can be pulverized.

In the manufacturing method according to this embodiment, from the viewpoint of enabling uniform dispersion of the first particles and the second particles, the molar ratio of the first particles to the second particles is preferably 0.1 or more and 100 or less, more preferably 0.1 or more and 10 or less, and is generally 0.1 or more and 10 or less.

In the manufacturing method according to this embodiment, from the viewpoint of enabling uniform dispersion the first particles in the mixture, the average particle diameter of the first particles is preferably 100 nm or more and 100 µm or less.

In the manufacturing method according to this embodiment, from the viewpoint of enabling uniform dispersion the second particles in the mixture, the average particle diameter of the second particles is preferably 100 nm or more and 100 µm or less.

In addition, in the manufacturing method according to this embodiment, a mixing time in the mixing step is generally 1 hour or more and 500 hours or less, and a mixing temperature in the mixing step is generally 10°C or more and 60°C or less (in terms of ambient temperature) and is preferably 10°C or more and 40°C or less.

The method of manufacturing a positive electrode active material according to this embodiment includes the mixing step, and hence lower cost is achieved and a positive electrode active material for forming an electrode excellent in charge-discharge efficiency can be obtained by a simple method.

### 3. Battery

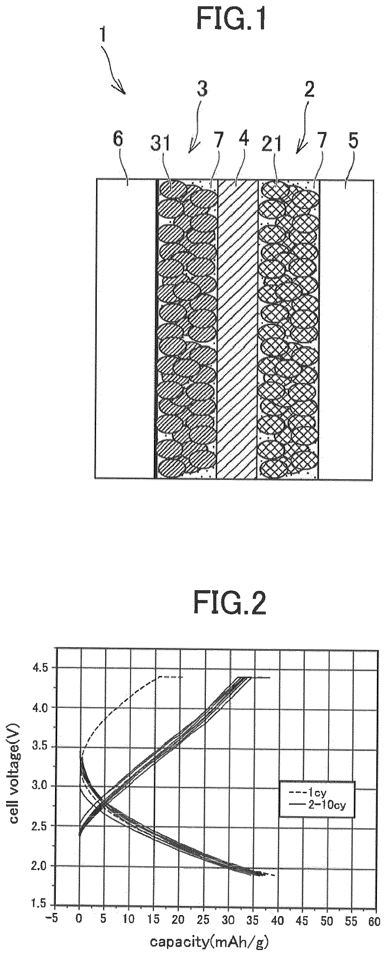

FIG. 1 is a view for schematically illustrating an example of a battery according to one embodiment of the present invention using the positive electrode active material according to the above-mentioned embodiment. As illustrated in FIG. 1, the battery according to this embodiment includes a positive electrode 2 and a negative electrode 3, and the positive electrode 2 contains the positive electrode active material according to the above-mentioned embodiment.

The battery according to this embodiment is preferably a secondary battery from the viewpoint of being capable of being charged and discharged, and is more preferably a non-aqueous electrolyte secondary battery from the viewpoint of the positive electrode active material containing LiX. The battery according to this embodiment may contain the positive electrode active material according to the above-mentioned embodiment as a positive electrode active material in its positive electrode.

As an example of the battery according to this embodiment, a lithium ion secondary battery is schematically illustrated in FIG. 1. As illustrated in FIG. 1, a lithium ion secondary battery (hereinafter referred to simply as "battery") 1 includes a positive electrode layer (positive electrode) 2, a negative electrode layer (negative electrode) 3, a separator 4, a positive electrode-side collector 5, and a negative electrode-side collector 6.

### 3.1. Positive Electrode

The positive electrode layer 2 includes an electrode material (positive electrode material) 21 containing the positive electrode active material according to the above-mentioned embodiment, and an electrolyte solution 7 filling gaps between particles of the positive electrode material 21.

The positive electrode layer 2 may contain a conductive material in addition to the positive electrode material 21. A known substance is used as the conductive material. For example, as a carbon-based conductive material, carbon black (KB), acetylene black (AB), SP-270, UP-5-a, or vapor grown carbon fiber (VGCF) may be used. The positive electrode layer 2 may contain one kind or a plurality of kinds of conductive materials.

The positive electrode layer 2 may further contain a binder. As the binder, various polymers that have heretofore been used as binders may be adopted. Specific examples of the polymer include polyvinylidene fluoride, polytetrafluoroethylene, polyvinyl alcohol, polyethylene terephthalate, polyacrylonitrile, and a styrene-butadiene rubber. The positive electrode layer 2 may contain one kind or a plurality of kinds of binders.

### 3.2. Negative Electrode

The negative electrode layer 3 includes an electrode material (negative electrode material) 31 containing the negative electrode active material, and the electrolyte solution 7 filling gaps between particles of the negative electrode material 31.

As the negative electrode active material, a substance that is known as a substance used for a lithium ion secondary battery may be adopted. Specific examples thereof include carbon (e.g., graphite), metal lithium, Sn, and SiO.

The negative electrode layer 3 may further contain the binder described above as a material that may be used for the positive electrode layer 2.

The electrolyte solution 7 contains a solvent and an electrolyte dissolved in the solvent.

As the solvent, a known solvent that is used for a lithium ion secondary battery may be adopted. A non-aqueous solvent, that is, an organic solvent, is used as the solvent. Examples of the non-aqueous solvent include carbonates, such as ethylene carbonate, dimethyl carbonate, ethyl methyl carbonate, diethyl carbonate, and propylene carbonate; acetonitrile, acetonitrile derivatives; ethers, such as ether, dimethoxyethane, and trimethoxyethane; fluorinated or chlorinated products thereof; and sulfones. Those solvents may be used alone or as a mixture thereof.

For the electrolyte, a substance that has heretofore been used as an electrolyte of a lithium ion secondary battery may be adopted. More specific examples of the electrolyte include LiPF₆, LiClO₄, and LiBF₄. The electrolyte solution 7 may contain one kind or a plurality of kinds of electrolytes.

In order to improve the stability of the performance of the battery and its electrical characteristics, any of various additives, such as overcharge inhibitors, may be added to the electrolyte solution 7.

### 3.3. Separator

The separator 4 is arranged between the positive electrode layer 2 and the negative electrode layer 3. The arrangement of the separator 4 between the positive electrode layer 2 and the negative electrode layer 3 can prevent a short circuit between the positive electrode and the negative electrode. In addition, when the separator 4 is porous, the electrolyte solution 7 and lithium ions can be allowed to permeate therethrough. As a material for the separator 4, for example, there are given resins (specifically, polyolefin-based polymers, such as polyethylene, polypropylene, and polystyrene).

For the positive electrode-side collector 5, for example, a metal foil of aluminum, an aluminum alloy, or the like may be used. In addition, as the negative electrode-side collector 6, for example, a metal foil of copper, a copper alloy, or the like may be used.

The battery 1 may include, in addition to the above-mentioned components, components such as a battery case, a positive electrode-side terminal, and a negative electrode-side terminal (none of which is shown). For example, a roll body formed by rolling the stack structure illustrated in FIG. 1 in many layers may be housed in a battery case. In addition, the positive electrode-side terminal is connected to the positive electrode-side collector 5, and the negative electrode-side terminal is connected to the negative electrode-side collector 6.

### 3.4. Applications

The battery according to this embodiment is low cost and excellent in charge-discharge efficiency, and hence can be suitably used as, for example, not only a battery for a battery pack or a small mobile device, but also a battery for a large machine, for example, a vehicle, such as an electric bicycle, a two-wheeler, a three-wheeler, or a four-wheeler, or a ship.

### 4. Examples

The present invention is hereinafter described in more detail by way of Examples with reference to the drawings. However, the present invention is by no means limited to Examples.

### 4.1. Example 1

### (Preparation of Positive Electrode Active Material)

LiF and Fe₂O₃ were used as raw materials. While the molar ratio of LiF and Fe₂O₃ (LiF:Fe₂O₃) was adjusted to 2:1, LiF and Fe₂O₃ were mixed with a planetary ball mill for 24 hours to prepare a mixture of Test No. 1. In this case, the mixing was performed under the condition of 600 rpm at an external environmental temperature of 25°C.

The resultant mixture was evaluated by charge-discharge measurement. In the charge-discharge measurement, the resultant mixture (90 g) was composited with acetylene black (AB) (5 g) at 600 rpm, and then the resultant was mixed with polyvinylidene difluoride (PVDF) to prepare a positive electrode active material (mixture:AB:PVDF=70:25:5 (mass ratio)). The positive electrode active material was applied onto an aluminum foil to prepare a working electrode (positive electrode).

The Fe₂O₃ used in Test No. 1 had been pulverized at 650 rpm for 24 hours before being mixed with LiF, whereas the Fe₂O₃ used in each of Test Nos. 2 to 6 was used without being pulverized. In addition, in Test Nos. 3 and 4, positive electrode active materials of Test Nos. 3 and 4 were each prepared by the same treatment as that of Test No. 1 except that LiF and Fe₂O₃ were used with their molar ratio adjusted to a value shown in Table 1.

### (Production of Battery)

The positive electrode active material of each of Test Nos. 1 to 6 of Example 1 was applied onto an aluminum foil to prepare a working electrode (positive electrode). In addition, metal lithium was used for a counter electrode (negative electrode), 1 M LiPF₆EC:DEC (1:1) was used for an electrolyte solution, and a cell was produced using a bipolar cell made of stainless steel.

### (Charge-discharge Test)

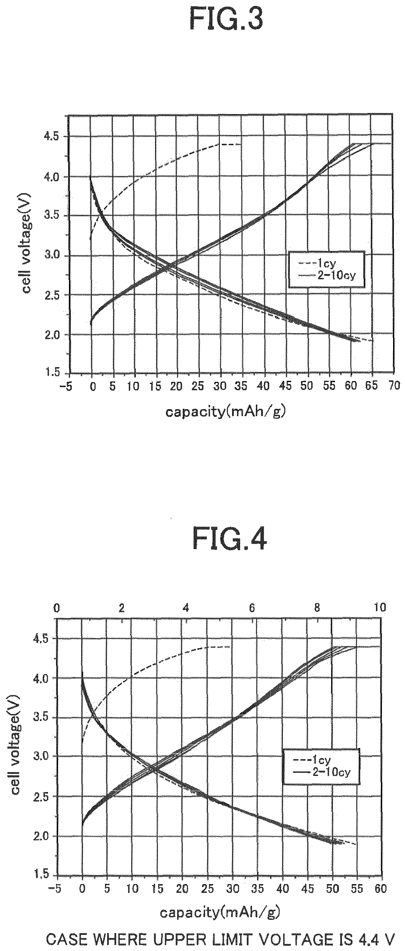

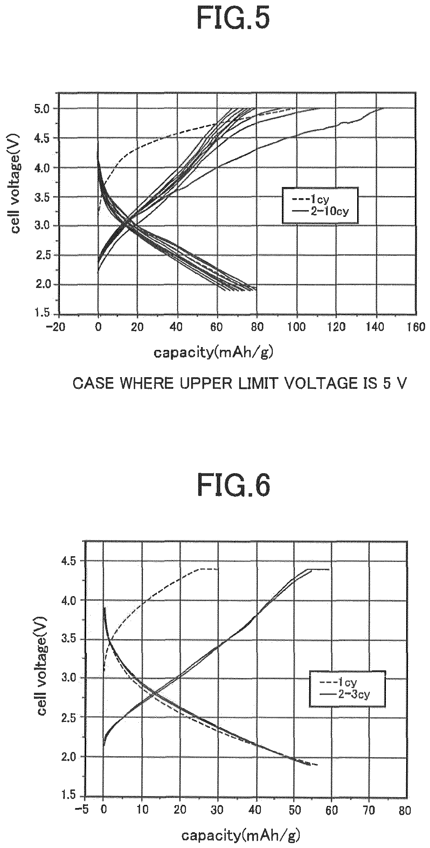

In this Example, a charge-discharge test was performed at a current density of 1 mA/cm², in the voltage range of from 4.4 V to 1.9 V (in FIG. 5, measurement was performed also in the voltage range of from 5 V to 1.9 V), and at a measurement temperature of 25°C. In each of FIG. 2 to FIG. 6, the charge-discharge test results (charge-discharge curves) of a battery using the positive electrode active material of Test No. 1, 3, 5, or 6 of Example 1 are shown (axis of abscissa: capacity, axis of ordinate: voltage, dashed line: first cycle, solid lines: second to tenth cycles (in FIG. 6, second and third cycles)).

It can be understood from the results shown in Table 1 that the positive electrode active material of each of Test Nos. 1 to 6 enables the manufacture of a low-cost battery excellent in charge-discharge efficiency by virtue of containing LiX and Fe₂O₃.

**Table 1**

| Test No. | Raw material LiF | | Raw material Fe₂O₃ | | LiF/Fe₂O₃ (Molar ratio) | Mixture | |
|---|---|---|---|---|---|---|---|
| | Average particle diameter (µm) | Purity (%) | Average particle diameter (µm) | Purity (%) | | Average particle diameter (nm) | Current density (mAh/g) |
| 1 | 0.1 | 99 | 1 | 95 | 2/1 | 250 | 39 |
| 2 | 0.1 | 99 | 1 | 95 | 2/1 | 250 | 65 |
| 3 | 0.1 | 99 | 1 | 95 | 1/1 | 250 | 53 |
| 4 | 0.1 | 99 | 0.3 | 99.9 | 2/1 | 250 | 54 |
| 5 | 0.1 | 99 | 0.3 | 99.9 | 1/1 | 250 | 56 |
| 6 | 0.1 | 99 | 1 | 99.9 | 2/1 | 250 | 57 |

### 4.2. Example 2

A positive electrode active material was prepared in the same manner as in Test No. 1 of Example 1 except that red rust was used as Fe₂O₃, and a battery was manufactured using the positive electrode active material.

The positive electrode active material for a non-aqueous electrolyte secondary battery of the present invention can be used in the manufacture of a low-cost battery excellent in charge-discharge efficiency. The battery can be suitably used, for example, as a battery for not only a small mobile device, but also a large machine, for example, a vehicle, such as an electric bicycle, a two-wheeler, a three-wheeler, or a four-wheeler, or a ship, and as a battery in a battery pack.

Many other modifications will be apparent to and be readily practiced by those skilled in the art without departing from the scope of the invention. It should therefore be understood that the scope of the appended claims is not intended to be limited by the details of the description but should rather be broadly construed.

## Claims

1. A positive electrode active material for a non-aqueous electrolyte secondary battery (1), comprising:
LiX, where X represents a halogen atom; and
Fe₂O₃.

2. The positive electrode active material for a non-aqueous electrolyte secondary battery (1) according to claim 1, wherein the positive electrode active material has a molar ratio of LiX to Fe₂O₃ of 0.1 or more and 100 or less.

3. The positive electrode active material for a non-aqueous electrolyte secondary battery (1) according to claim 1 or 2, wherein the positive electrode active material has an average particle diameter of 100 µm or less.

4. The positive electrode active material for a non-aqueous electrolyte secondary battery (1) according to any one of claims 1 to 3, wherein a ratio of Fe₂O₃ in metal oxides contained in the positive electrode active material for a non-aqueous electrolyte secondary battery (1) is 1 mol% or more and 100 mol% or less.

5. A method of manufacturing a positive electrode active material for a non-aqueous electrolyte secondary battery (1), the method comprising mixing:
first particles each formed of LiX, where X represents a halogen atom; and
second particles each containing Fe₂O₃.

6. The method of manufacturing a positive electrode active material for a non-aqueous electrolyte secondary battery (1) according to claim 5, wherein the mixing is performed at a number of rotations of 100 rpm or more.

7. The method of manufacturing a positive electrode active material for a non-aqueous electrolyte secondary battery (1) according to claim 5 or 6, wherein the mixing provides a mixture having an average particle diameter of 100 µm or less.

8. The method of manufacturing a positive electrode active material for a non-aqueous electrolyte secondary battery (1) according to any one of claims 5 to 7, wherein a molar ratio of the first particles to the second particles is 0.1 or more and 100 or less.

9. A positive electrode, comprising the positive electrode active material for a non-aqueous electrolyte secondary battery (1) of any one of claims 1 to 4.

10. A battery (1), comprising the positive electrode of claim 9.

11. A battery pack, comprising the battery (1) of claim 10.

12. A vehicle, comprising the battery (1) of claim 10.
